# EUROPEAN PATENT SPECIFICATION

(11) **EP 4 483 166 B1**
(45) Date of publication and mention of the grant of the patent: **04.11.2026**
(21) Application number: 23712419.3
(22) Date of filing: 22.02.2023
(51) Int. Cl.: G01N 21/25, G01N 21/69, G01N 21/76, G01N 21/64

(54) **METHODS AND DEVICES FOR INCREASING DYNAMIC RANGE OF OPTICAL SENSOR BASED SYSTEMS**
VERFAHREN UND VORRICHTUNGEN ZUR ERHÖHUNG DES DYNAMIKBEREICHS VON SYSTEMEN AUF DER BASIS OPTISCHER SENSOREN
PROCÉDÉS ET DISPOSITIFS POUR AUGMENTER LA PLAGE DYNAMIQUE DE SYSTÈMES BASÉS SUR UN CAPTEUR OPTIQUE

(30) Priority: 23.02.2022 US 202263312982 P
(43) Date of publication of application: 01.01.2025
(73) Proprietor: Meso Scale Technologies, LLC, Rockville, MD 20850 (US)
(72) Inventor: KOCHAR, Manish, Rockville, Maryland 20853 (US)
(74) Representative: Hofstetter, Schurack & Partner
(86) International application number: PCT/US2023/063057
(87) International publication number: WO 2023/164501

(56) References cited:
- US-A1- 2007 121 110
- US-A1- 2010 267 049
- US-A1- 2021 016 288

## Description

### Field of the Invention

The present disclosure is related to methods and devices for increasing the dynamic range of optical sensor based measurement systems.

### Background

Many measurement systems make use of optical sensors to measure various phenomena. Some such systems may benefit from measurements made with a high dynamic range to capture signals with intensities across multiple orders of magnitude.

Some example systems include assay systems and processes that make measurements based on emitted light, such as electrochemiluminescence assays, chemiluminescence assays, luminescence assays (e.g., fluorescence), and other light emitting assays. Accordingly, it is desirable to provide systems and methods for measuring emitted light more accurately across multiple orders of magnitude.

Optical detection systems using multiple detectors and beam splitting arrangements have been proposed in the prior art. For example, US 2010/0267049 A1 discloses assay systems employing optical detection components and configurations for measuring light emitted from assay processes, including arrangements for improving measurement performance in biological assays.

Further, US 2007/0121110 A1 describes optical measurement systems using detectors and associated optical arrangements, including configurations for handling signals of varying intensity and improving sensitivity and measurement accuracy.

Additionally, US 2021/0016288 A1 discloses optical detection systems that utilize multiple sensing elements and associated signal processing approaches to improve measurement performance, including extensions of dynamic range and sensitivity in optical measurement applications.

### Summary

The inventions disclosed in this document describe imaging methods to extend the dynamic range of light detection systems with the use of two or more optical sensors for concurrent measurement of emitted light signals.

In an embodiment, a light signal, e.g., an emitted light signal or a generated light signal, is split into two paths using an optical device such as a beam splitting device cube, or a plate or pellicle beam splitting device. The beam splitting device directs a large fraction of the light towards the detector that will be used for highly sensitive measurements at the low end of the dynamic range. The remaining fraction of light is directed towards the detector that will be used for measuring higher light levels. When low intensity signals are produced, a large fraction of the small amount of light therefrom is directed to the detector set up for high sensitivity measurements, permitting measurements at the low end of the dynamic range. When high intensity signals are produced, a small fraction of the large amount of light is directed to the detector set up for low sensitivity measurements, permitting measurements at the high end of the dynamic range.

In an embodiment, an apparatus for conducting an assay based on an electrochemical process is provided. The apparatus includes a first detector configured to capture data associated with the electrochemical process; a second detector configured to capture data associated with the electrochemical process; and a beam splitting device configured to split emitted light from the electrochemical process into a first light beam directed at the first detector and a second light beam directed at the second detector, wherein the first detector occupies a first portion of a single imaging sensor and the second detector occupies a second portion of the single imaging sensor, or wherein the first detector and the second detector are of the same device type configured with different binning settings.

In an embodiment, the apparatus further comprises a housing and plate electrical connector.

In an embodiment, the apparatus further comprises a voltage source or current source configured to initiate the electrochemical process via the plate electrical connector.

In an embodiment, the beam splitting device is configured to transmit the first light beam and to reflect the second light beam, and the beam splitting device is configured with a transmission percentage of at least 90%, at least 95%, or at least 99%.

In an embodiment, the beam splitting device is configured to transmit the first light beam and to reflect the second light beam, and the beam splitting device is configured with a reflection percentage of at least 90%, at least 95%, or at least 99%.

In an embodiment, the detectors include a photo-detector.

In an embodiment, the photo-detector includes at least one of a CCD, CMOS device, scientific CMOS device, EMCCD device, SiPM device, APD, and photodiode.

In an embodiment, the first detector and the second detector are of a same device type, the first detector is configured with a first set of settings to decrease read noise and increase low light sensitivity, and the second detector is configured with a second set of settings equal to the first set of settings.

In an embodiment, the first set of settings include binning settings combining multiple photo-detector pixels .

In an embodiment, a combined dynamic range of the first detector and the second detector is at least a magnitude of 10x, at least 20x, or at least 100x greater than an individual dynamic range of the first detector and the second detector.

In an embodiment, the first detector and the second detector are of a same device type, the first detector is configured with first set of settings to decrease read noise and increase low light sensitivity, and the second detector is configured with a second set of settings to increase high-end dynamic range.

In an embodiment, the second set of settings include finer binning settings than the first set of settings to capture higher light levels.

In an embodiment, the first detector is a higher sensitivity device than the second detector.

In an embodiment, the first detector is a first CCD or CMOS device and the second detector is a second CCD or CMOS device.

In an example outside the scope of the claimed invention, the first detector is a SiPM device and the second detector is an imaging device.

In an embodiment, the first detector occupies a first portion of a single sensor and the second detector occupies a second portion of the single sensor.

In an embodiment, the single sensor is an imaging sensor.

In an embodiment, a voltage source or current source configured to initiate the electrochemical process via a plate electrical connector is configured to initiate individual electrochemical processes in sequence to minimize optical crosstalk.

In an embodiment, the beam splitting device includes at least one of a fiber optic splitter, a beam splitting device cube, a plate beam splitting device, and a pellicle beam splitting device.

In an embodiment, the beam splitting device includes a fiber optic splitter, the apparatus further comprising: light collection optics configured to receive the emitted light; a fiber connector configured to interface with the light collection optics; a first fiber collimator configured to direct the first light beam at the first detector; and a second fiber collimator configured to direct the second light beam at the second detector.

In an embodiment, the fiber optic splitter is configured to split the emitted light into the first light beam and the second light beam.

In an embodiment, the light collection optics include at least one of a GRIN lens, fiber optic taper, discrete lens, combination of lenses, or Ball lens .

In an embodiment, the beam splitting device includes a 2x2 fiber optic coupler-splitter with a split ratio, the apparatus further comprising: a reference light source, wherein the 2x2 fiber optic coupler-splitter is configured to selectively direct reference light from the reference light source or the emitted light from the electrochemical process to the first detector and the second detector.

In an embodiment, the split ratio is selected from a 99:1 ratio and a 90:1 ratio.

In an embodiment, the reference light source is configured for selective activation.

In an embodiment, a reference light source is included in the apparatus and the beam splitting device is configured to split reference light emitted from the reference light source into a first reference light beam directed at the first detector and a second reference light beam directed at the second detector.

In an embodiment, the reference light source is configured for selective activation.

In an embodiment, at least one of the first detector and the second detector include a sensor array.

In an embodiment, the apparatus further includes one or more filters configured to permit selected wavelengths of light through.

In an embodiment, an apparatus for conducting an assay based on a light-emitting process is provided. The apparatus includes a first detector configured to capture data associated with the emitted light; a second detector configured to capture data associated with the emitted light; and a beam splitting device configured to split the emitted light into a first light beam directed at the first detector and a second light beam directed at the second detector.

In an embodiment, the emitted light is emitted from a luminescence-based assay.

In an embodiment, the emitted light is emitted from a chemiluminescence-based assay.

In an embodiment, the emitted light is emitted from an electrochemiluminescence-based assay.

In an embodiment, the emitted light is emitted from a fluorescence-based assay.

### Brief Description of the Figures

FIG. 1 illustrates an example apparatus for increasing dynamic range of optical measurements, consistent with embodiments hereof.
FIG. 2 illustrates an example apparatus for increasing dynamic range of optical measurements, consistent with embodiments hereof.
FIG. 3 illustrates an example apparatus for increasing dynamic range of optical measurements, consistent with embodiments hereof.
FIG. 4 illustrates an example apparatus for increasing dynamic range of optical measurements, consistent with embodiments hereof.

### Detailed Description of the Invention

The present disclosure provides systems, methods, and devices for extending dynamic range in light based measurements. Light based measurement systems may include any systems that make measurements (e.g., analytical measurements) based on the reception and/or detection of light. Such light based measurements may be based on an intensity, photon count, location, wavelength, or any other measurable property of light incident on a light-based measurement device. In some particular examples, light based measurements may be made in assay systems, including assay systems designed for electrochemiluminescence (ECL) assays and other light emitting assays. In some assay measurements, typical optical measurement may span five (5) or more logs (orders of magnitude). Although there exist different types of optical sensors with a large dynamic range, there are often practical design considerations that limit the actual achievable dynamic range.

For example, CCD imaging sensors are used in some instrumentation. CCD imaging sensors produce measurements recorded as "counts" that represent the number of electrons produced by the pixels upon being struck by photons. In examples, some CCD imaging sensors used in instrumentation can be read out at a 1x1 pixel binning (each CCD pixel is read out separately) to allow for measurements of signals over 10 million counts across the CCD imaging sensor. Other CCD sensors may saturate at lower or higher intensity levels depending on the pixel size, the capacity of the output shift registers, and the readout electronics. The read noise of a CCD may decrease as the binning level is increased. For example, the read noise of a CCD that is read out at 1x1 binning is typically greater than the read noise of the same CCD when read out at 2x2 or 4x4 binning Thus, operating a CCD with fine 1x1 pixel binning may create a trade-off between measurement of intense light signals and sensitivity to low light signals.

Conversely, CCD read noise can be significantly reduced by reading the sensor out at 4x4 binning (a 4x4 area of pixels is read out together), but this may approximately proportionally reduce the high end detection ability to 1-3 million counts and lower the spatial resolution of the CCD. In practice, such binning may create additional trade-offs. First, an ECL signal and analyte concentration for saturated spots (e.g., producing intense light output) may be difficult to accurately determine. Second, in some cases, it may become more difficult to accurately compensate for optical crosstalk using robust, simple techniques when some of the pixels in the image are saturated. More sophisticated numerical methods may be required.

Another problem faced by instrumentation designers is that many sensors that are optimized for detecting low light levels may saturate at higher light levels or may have a nonlinear response with increasing light intensity. Restricting the design to the use of a single sensor to simultaneously meet noise and dynamic range requirements may require further tradeoffs, for example, requiring the use of more expensive cooled sensors to achieve the desired system performance and/or restricting the use of sensors optimized for low light levels (because they saturate at higher light levels).

Some approaches to increasing dynamic range with single sensor systems include the following. In one approach, two or more exposures may be taken. For example, the information in a first exposure may be used to determine the binning level to be used for a second exposure. This approach includes compromises, especially when making multiple simultaneous measurements. For example, the approach accepts a higher read noise on lower intensity spots when they are imaged concurrently with a brighter spot. In another approach, implementation of more sophisticated optical crosstalk correction algorithms that are less sensitive to saturated pixels may be used.

The systems, methods, and devices discussed herein may be applicable to any system that employs optical measurements or light detection and may benefit from a wider dynamic measurement range. For illustrative purposes, specific devices and specific applications are discussed below. For example, in embodiments discussed herein, a multi-sensor approach may be employed in an assay apparatus to increase dynamic range. The scope of the embodiments described herein, however, are not limited by the specific illustrative examples discussed.

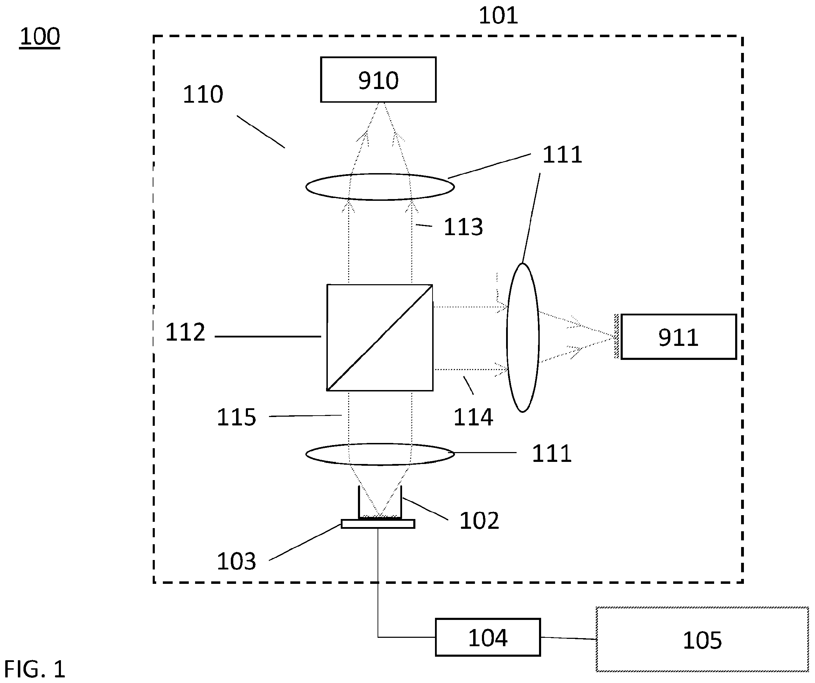

FIG. 1 illustrates an assay apparatus configured for increasing dynamic range, consistent with embodiments hereof. In embodiments, an assay apparatus 100 may include an optical system 110, a housing 101, a plate electrical connector 103, a voltage or current source 104, and a computer system 105. The assay apparatus may further include any components, parts, or devices appropriate for an assay system. The optical system 110 includes detectors 910 and 911 configured to make optical measurements. For example, the detectors 910 and 911 may include photo-detectors (*e.g.,* cameras, photodiodes, *etc.*)*.* The assay apparatus 100 is configured to conduct ECL assays by initiating electrochemical processes in a microplate 102 and measuring or detecting the light emitted therefrom. The electrochemical processes may be initiated via the plate electrical connector 103 excited by the voltage or current source 104. The housing 101 may be, for example, a light-tight enclosure.

The emitted light 115 from the electrochemical process is received by the optical system 110. The emitted light 115 may be, for example, generated or emitted by the electrochemical process. The optical system 110 includes one or more optical devices 111, which may include, as appropriate, lenses, objective lenses, light guides, fiber optic tapers, imaging optics, etc. The optical system 110 further includes a beam splitting device 112 configured to split the emitted light 115 from the electrochemical process into a first light beam 113 directed at the first detector 910 and a second light beam 114 directed at the second detector 911. The first detector 910 and the second detector 911 are each configured to capture data associated with the electrochemical process, such as amounts and locations of light emitted therefrom. The first detector 910 and the second detector 911 are further configured to communicate with the computer system 105 of the assay apparatus to transmit data, receive settings, etc.

In an embodiment, the optical system is configured to split the emitted light 115 from the electrochemical process into two light beams with a fixed or known splitting ratio and to direct each light beam to a separate detector to extend dynamic range and reduce noise.

The emitted light 115 from the electrochemical process may be split using a beam splitting device 112, such as a non-polarizing beam splitting device cube or other type of beam splitting device such as a plate beam splitting device. The beam splitting device may have a fixed transmission ratio %T/%R, where %T is the percentage of incident light transmitted by the beam splitting device and %R is the percentage of incident light reflected by the beam splitting device. The transmitted light 113 is directed (e.g., via optical device 111) onto the first detector 910 and the reflected light 114 is directed onto the second detector 911 as shown in FIG. 1.

The system illustrated in FIG. 1 has a simplified optical setup to illustrate embodiments herein concisely. In practice, there are many ways to design the optics of this system to optimize system performance and meet system specifications such as size, light collection efficiency, image area, sensor area, telecentricity, etc. Such further designs remain within the scope of this disclosure.

In embodiments, the beam splitting device 112 is configured to transmit the first light beam 113 and to reflect the second light beam 114. In examples, the beam splitting device 112 may be configured with a transmission percentage (%T) of at least 90%, at least 95%, or at least 99%. These %s are provided by way of example only, and systems consistent with this disclosure are not limited to the numbers provided. In these examples, the first detector 910 receives at least 90%, at least 95%, or at least 99% of the total light emitted. The remaining percentage of incident light is directed to second detector 911. Due to light loss from reflections, absorptions, dispersion, etc., the total amount of light received by the first detector 910 and the second detector 911 may be less than 100% of the total emitted light 115. Thus, the optical system 110 may be configured such that the first detector 910 is used to perform low light level detection and the second detector 911 is used to measure high light levels. Thus, when a low light signal is emitted from the electrochemical process, the first detector 910 receives a large percentage of the low light signal and is therefore able to accurately measure the low light signal. The second detector 911 may receive a small percentage of the low light signal and its measurement results may be disregarded. When a high intensity light signal is emitted from the electrochemical process, the second detector 911 receives a small percentage of the high intensity light signal and is therefore able to accurately measure the high intensity light signal by only receiving a small portion. In the case of a high intensity light signal, the first detector 910, which receives a large percentage of the signal, may saturate and its results may be disregarded. Because the transmission ratio of the beam splitting device 112 is known, the computer systems 105 are able to accurately make a measurement of the electrochemical process based on the known percentage of light received by each of the first detector 910 and the second detector 911.

The amount of light incident on the first detector 910 will be nominally 100-%T less than the light incident on a conventional single detector analyzer. The potential resulting loss in sensitivity may be compensated for by choice of sensor/sensor technology, the use of higher levels of binning (with CCD sensors) to reduce electronic noise, and other means. Minimal to zero measurable loss in system sensitivity is anticipated if %T is selected to be 99% or higher.

In a further embodiment, the beam splitting device 112 is configured to transmit the first light beam and to reflect the second light beam with a reflection percentage (%R) of at least 90%, at least 95%, or at least 99%. In other embodiments, the %T and %R values may be equal (e.g., 50% %T and 50% %R) or approximately equal (e.g., within 1%-3% of each other). These %s are provided by way of example only, and systems consistent with this disclosure are not limited to the numbers provided. This the system may be configured such that the second detector 911 is used to perform low light level detection and the first detector 910 is used to measure high light levels. In such a configuration, the second detector 911 receives at least 90%, at least 95%, or at least 99% of the total light emitted. The remaining percentage of incident light is directed to first detector 910. Due to light loss from reflections, absorptions, dispersion, etc., the total amount of light received by the first detector 910 and the second detector 911 may be less than 100% of the total emitted light 115.

In embodiments, the transmission and/or reflection percentages of the beam splitting device 112 may differ from the values provided above. In embodiments, the beam splitting device 112 may have a transmission or reflection percentage of 50% or greater. Selection of different transmission or reflection percentages may be coupled with configuration or selection of the first detector 910 and the second detector 911 accordingly while remaining within the scope of the embodiments discussed herein. For example, a 50/50 split from the beam splitting device 112 may be employed to increase the dynamic range of the system as a whole according to appropriate selection of detectors and their configurations, in a fashion similar to that discussed below.

Additionally, in embodiments, one or more filters may be used to diminish, reduce, or otherwise alter the amount of light incident on either the first detector 910 or the second detector 911. For example, a filter may be used in line with the detector that is used for detecting high light levels. For example, this may further reduce the chances for saturation. In embodiments, such filters may have a fixed or variable transmission %. In embodiments, multiple fixed transmission % filters may be mechanically swappable in line with the first detector 910 or the second detector 911. In an example, such filters may be mounted to a wheel or other rotary device configured to rotate successive filters into appropriate position. In embodiments, filters in line with the first detector 910 or the second detector 911 may be used for polarization purposes.

In further embodiments, beam splitting device 112 may include multiple beam splitting devices 112. For example, a plurality of mechanically interchangeable beam splitting devices 112 may be used to alter the splitting ratio between a respective plurality of known splitting %s. In an example, such beam splitting devices 112 may be mounted to a wheel or other rotary device configured to rotate successive beam splitting devices 112 into appropriate position. In still further embodiments, the beam splitting device 112 may be configured to split the emitted light 115 into more than two light beams. For example, the beam splitting device 112 may be arranged with other appropriate optical components to split the emitted light 115 into three or more light beams according to wavelength. For example, such may be used for flow cytometry purposes.

All further discussion refers to a configuration in which the first detector 910 is used to perform low light level detection and a beam splitting device 112 is used to split the emitted light into a first light beam 113 and a second light beam 114. It will be noted that each of the following variations may also be applied or adapted to the configuration in which the second detector 911, receiving the reflected light, is used to perform low light level detection, or any of the additional beam splitting configurations discussed above.

In examples, the first detector 910 and the second detector 911 may be photo-detectors and may be selected from a variety of imaging and non-imaging optical sensors including CCD, CMOS, scientific CMOS, EMCCD, SiPM, APDs, photodiodes, and others. In embodiments, the first detector 910 and/or the second detector 911 may each include a sensor In embodiments consistent with the claimed invention, the first detector and the second detector are implemented either as first and second portions of a single imaging sensor, or as the same detector device type configured with different binning settings.

In embodiments, the first detector 910 and/or the second detector 911 may be a 2-Layer transistor pixel stacked CMOS image sensor. In a 2-Layer transistor pixel stacked CMOS image sensor, photodiodes and pixel transistors may be provided in two layers rather than on a same layer as in conventional stacked CMOS image sensor designs. Such a two layer arrangement may permit larger photodiodes, providing a higher saturation level, as well as larger transistors, providing reduced noise. Thus, 2-Layer transistor pixel stacked CMOS image sensors may be used to increase dynamic range and reduce noise. These benefits may be amplified when such 2-layer transistor pixel stacked CMOS image sensors are used in the systems described herein. In embodiments, the first detector 910 and the second detector 911 may be formed from a single 2-layer transistor pixel stacked CMOS image sensor, wherein the first detector 910 and the second detector 920 occupy different portions of surface of the image sensor, as explained in greater detail below.

In an embodiment, the first detector 910 and the second detector 911 are of a same device type, such as a CCD based imaging sensor. The first detector 910 is configured with a first set of settings to decrease read noise and increase low light sensitivity, and the second detector 911 is configured with a second set of settings equal to the first set of settings. In such an embodiment, the dynamic range of the optical system 110 (or the combined dynamic range of the first detector 910 and the second detector 911) is increased 10x, 20x, 100x (e.g., for %T/%R percentages of 90%, 95%, 99% of the splitter) relative to what would be achievable by a single detector with the same settings. Different %T/%R percentages may yield different dynamic range increases. The dynamic range may be further increased by changes to the settings or configuration of the first detector 910 and the second detector 911. Settings to decrease read noise and increase light sensitivity may include using a coarser binning, e.g., 2x2, 3x3, 4x4, etc., that combine multiple pixels. Different types of optical sensors other than CCD based imaging sensors may also be used in this embodiment, with settings configured appropriately according to the device type selected.

Alternatively, when the first detector 910 and the second detector 911 are of a same device type, they may be configured with different settings. For example, the first detector 910 may be configured with a first set of settings to decrease read noise and increase low light sensitivity (e.g., by using a coarser binning) and the second detector 911 may be configured with settings to increase high-end dynamic range (e.g., by using a finer binning, such as 1x1). In such an embodiment, the second detector 911 is configured to measure higher levels than the first detector 910 and thus may extend the high end of the dynamic range further than the configuration wherein the first detector 910 and the second detector 911 have the same settings.

For example, consider a 90% split is used for the beam splitting device 112. If 90% of the emitted light 115 is incident on a CCD sensor at 4x4 binning for the first detector 910, a dynamic range may span 10 counts to 1 million counts. The remaining 10% (or less, due to, e.g., light loss) of the emitted light 115 may be incident on a CCD sensor at 1x1 binning for the second detector 911 (having a range of 1000 to 10 million counts). This permits a full dynamic range of 11 counts (low end of the first detector 910 times 1.1x ) to 100 million counts (high end of second detector 911 times 10x). The multipliers 1.1x and 10x are derived from the light splitting percentages and are used to compensate for the fact that each detector 910/911 receives less than 100% of the light signal. 1.1x is approximately equal to 1/90% and 10x is equal to 1/10%.

In another example, consider a 95% split is used for the beam splitting device 112. If 95% of the emitted light 115 is incident on a CCD sensor at 4x4 binning for the first detector 910, a dynamic range may span 10 counts to 1 million counts. The remaining 5% (or less, due to, e.g., light loss) of the emitted light 115 may be incident on a CCD sensor at 1x1 binning for the second detector 911 (having a range of 1000 to 10 million counts). This permits a full dynamic range of 11 counts (low end of the first detector 910 times 1.05x and rounded up to nearest integer) to 200 million counts (high end of second detector 911 times 20x).

In another example, consider a 99% split is used for the beam splitting device 112. If 90% of the emitted light 115 is incident on a CCD sensor at 4x4 binning for the first detector 910, a dynamic range may span 10 counts to 1 million counts. The remaining 1% (or less, due to, e.g., light loss) of the emitted light 115 may be incident on a CCD sensor at 1x1 binning for the second detector 911 (having a range of 1000 to 10 million counts). This permits a full dynamic range of 11 counts (low end of the first detector 910 1.01x and rounded up to nearest integer) to 1 billion counts (high end of second detector 911 times 100x).

In another embodiment, the first detector 910 and second detector 911 may be different device types. The first detector 910 may be a high sensitivity device (higher sensitivity than the second detector 911) while the second detector 911 is a low sensitivity device (lower sensitivity than the first detector 910). Sensitivity refers to how much device measurement output varies according to signal input. When receiving signals of a similar input range, higher sensitivity devices exhibit a wider output range. This may permit higher sensitivity devices to provide more precise measurements and may permit lower sensitivity devices to provide measurements over a broader signal input range. For example, the first detector 910 may be a high performance CCD/CMOS camera and the second detector 911 may be a lower cost CCD/CMOS sensor. Because the light levels detected by the second detector 911 are higher, the need for cooling to reduce noise levels may be significantly reduced or even eliminated completely because higher dark current levels (noise), associated with higher temperatures, are overwhelmed by the higher light levels (signal). Eliminating a cooling system in such a system may result in a simpler and less expensive system.

In another example outside the scope of the claimed invention, the first detector 910 may be a non-imaging sensor, such as a SiPM or photodiode while the second detector 911 is an imaging based sensor such as a CCD/CMOS camera. Such a variation may be implemented with a low cost CCD/CMOS camera and non-imaging optics may be simpler and less expensive to implement, resulting in a lower cost and simpler system. In a still further variation, both the first detector 910 and the second detector 911 may be non-imaging sensors, such as SiPMs or photodiodes, with appropriate selection of beam splitting device 112 ratios and detector characteristics.

In still another variation, a single imaging sensor may be used for both the first detector 910 and the second detector 911. In such an embodiment, the first detector 910 may occupy a first portion of the imaging sensor and the second detector 911 may occupy a second portion of the imaging sensor. For example, the 90% (or 95%, 99%, etc.) signal could be directed onto one half of the sensor and the 10% (or 5%, 1%, etc.) signal directed onto the other half. Other proportions of the imaging sensor may also be used.

When such a sensor is used in an ECL assay, optical crosstalk may be reduced where the voltage source or current source configured to initiate the electrochemical process via the plate electrical connector is configured to initiate individual electrochemical processes in sequence rather than simultaneously. Additionally, simpler methods of optical crosstalk correction may be applied because strongly emitting electrochemical processes (that may have saturated the sensor in a conventional single sensor system) may be more accurately measured. For example, when using with multi-well and/or multi-spot assay plates, individually exciting the multiple wells or spots may be performed. Multi-well and multi-spot assay plates permitting such sequential activation/initiation are described, for example, in U.S. Application No. 17/887,191, filed August 12, 2022, the contents of which are hereby incorporated by reference.

In embodiments, optical systems 110 including at least one imaging sensor may provide advantages over optical systems 110 include no imaging sensors. For example, the imaging sensor may be used to obtain additional diagnostic information that would otherwise not be available with a non-imaging detector. For example, the imaging sensor could also be used to verify proper registration of plates, such as, e.g., microtiter plates or other reaction vessels during loading and positioning and support optional additional sensing modalities.

The assay apparatus 100 having the optical system 110, as described above, may provide several advantages over conventional systems. First, as discussed above, the dynamic range may be extended with fewer tradeoffs with respect to signal to noise ratio. Second, because the optical system 110 is arranged for simultaneous detection of low and high light levels, dual excitation methods requiring multiple pulses may eliminated, thus decreasing assay read times. Further, in some embodiments, as discussed above, lower cost sensors and/or optics may be employed, thus reducing the cost of the system.

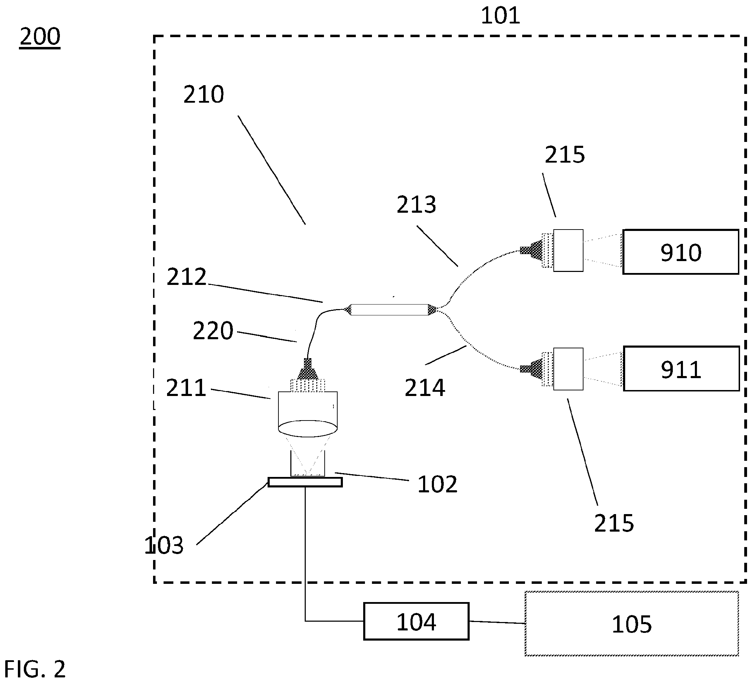

FIG. 2 illustrates an assay apparatus configured for increasing dynamic range, consistent with embodiments hereof. In embodiments, an assay apparatus 200 may include an optical system 210, a housing 101, a plate electrical connector 103, a voltage or current source 104, and a computer system 105. The assay apparatus may further include any components, parts, or devices appropriate for an assay system. The optical system 210 includes detectors 910 and 911 configured to make optical measurements. The assay apparatus 200 is configured to conduct ECL assays by initiating electrochemical processes in a microplate 102 and measuring or detecting the light emitted therefrom. The electrochemical processes may be initiated via the plate electrical connector 103 excited by the voltage or current source 104. The housing 101 may be, for example, a light-tight enclosure.

The emitted light from the electrochemical process is received by the optical system 210. The optical system 210 includes light collection optics 211, such as a GRIN or Ball lens or any appropriate optics that transfers the emitted light to the source fiber optic cable 220. The optical system 210 further includes a beam splitting device 212 configured to split emitted light carried by a source fiber optic cable 220 from the electrochemical process into a first light beam carried by a first fiber optic cable 213 directed at the first detector 910 and a second light beam carried by a second fiber optic cable 214 directed at the second detector 911. The first detector 910 and the second detector 911 are each configured to capture data associated with the electrochemical process, such as light emitted therefrom. The first detector 910 and the second detector 911 are further configured to communicate with the computer system 105 of the assay apparatus to transmit data, receive settings, etc.

In the optical system 210, the beam splitting device 212 may include a fiber optic splitter configured to split the light emitted from the electrochemical process into a first light beam carried by a first fiber optic cable 213 and a second light beam carried by a second fiber optic cable 214. The fiber optic splitter may be configured to direct at least 90%, at least 95%, or at least 99% of the received light to the first detector 910. As discussed above with respect to beam splitting device 112, these values are illustrative only and any value of 50% or more may be used. First and second fiber collimators 215 may be used at the terminations of the fiber optic cables 213/214 to direct the light beams to the appropriate detectors 910/911.

In embodiments that include a fiber optic splitter as the beam splitting device 212, the arrangement, make-up, and configuration of first detector 910 and second detector 911 may include all of the variations discussed above with respect to FIG. 1 and the optical system 110.

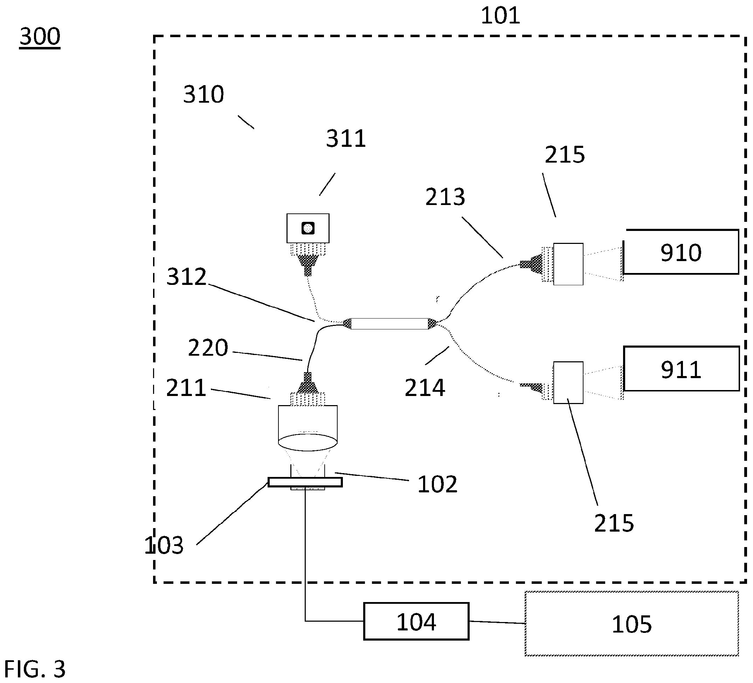

FIG. 3 illustrates an assay apparatus configured for increasing dynamic range, consistent with embodiments hereof. In embodiments, an assay apparatus 300 may include an optical system 310, a housing 101, a plate electrical connector 103, a voltage or current source 104, and a computer system 105. The assay apparatus may further include any components, parts, or devices appropriate for an assay system. The optical system 310 includes detectors 910 and 911 configured to make optical measurements. The assay apparatus 300 is configured to conduct ECL assays by initiating electrochemical processes in a microplate 102 and measuring or detecting the light emitted therefrom. The electrochemical processes may be initiated via the plate electrical connector 103 excited by the voltage or current source 104. The housing 101 may be, for example, a light-tight enclosure.

The emitted light from the electrochemical process is received by the optical system 310. The optical system 310 includes light collection optics 211, such as a GRIN or Ball lens or any appropriate optics that transfers the emitted light to the source fiber optic cable 220. The optical system 310 further includes a beam splitting device 312 configured to split emitted light carried by a source fiber optic cable 220 from the electrochemical process or reference light emitted from a reference light source 311 into a first light beam carried by a first fiber optic cable 213 directed at the first detector 910 and a second light beam carried by a second fiber optic cable 214 directed at the second detector 911. The first detector 910 and the second detector 911 are each configured to capture data associated with the electrochemical process and/or the reference light source 311, such as light emitted therefrom. The first detector 910 and the second detector 911 are further configured to communicate with the computer system 105 of the assay apparatus to transmit data, receive settings, etc.

In the optical system 310, the beam splitting device 312 may include a fiber optic coupler-splitter configured to split emitted light carried by a source fiber optic cable 220 from the electrochemical process into a first light beam carried by a first fiber optic cable 213 and a second light beam carried by a second fiber optic cable 214. In this specific embodiment, a 2x2 fiber optic coupler-splitter is employed, although other splitters could be employed as well (e.g., a 3x3 splitter, 4x4 splitter, etc.). Fiber optic coupler-splitters employing other various input and/or output configurations may also be employed as appropriate. The fiber optic-coupler splitter may be configured to direct at least 90%, at least 95%, or at least 99% of the received light to the first detector 910. As discussed above with respect to beam splitting devices 112 and 212, these values are illustrative only and any value of 50% or more may be used.

The beam splitting device 312 may also split reference light emitted from a reference light source 311 through the first fiber optic cable 213 and through the second fiber optic cable 214. The reference light source 311 may be configured to emit light at a specified, predetermined or known intensity and wavelength range. First and second fiber collimators 215 may be used at the terminations of the fiber optic cables 213/214 to direct the light beams to the appropriate detectors 910/911. The reference light source 311 may be turned on (e.g., selectively activated), for example, for a brief period of time (e.g., a pulse) prior to an analytical measurement (e.g., capture of emitted light) and may be used to normalize the output of the first detector 910 and the second detector 911 and correct for gain variation and drift. Specifically, if the gain of either the first detector 910 or the second detector 911 has varied from an expected value, e.g., due to the temperature related changes or drift, a comparison with an expected output from the reference light source 311 may be used to correct and/or re-normalize the readings/output from the first detector 910 and the second detector 911. When the reference light source 311 is illuminated, the larger fraction of its output is directed to the second detector 911 and the smaller fraction to the first detector 910. Conversely, when the light from the electrochemical process is directed through the fiber optic coupler-splitter, the larger fraction of light is directed to the first detector 910 and the smaller fraction to the second detector 911.

In embodiments that include a fiber optic coupler-splitter as the beam splitting device 312, the arrangement, make-up, and configuration of first detector 910 and second detector 911 may include all of the variations discussed above with respect to FIG. 1 and the optical system 110.

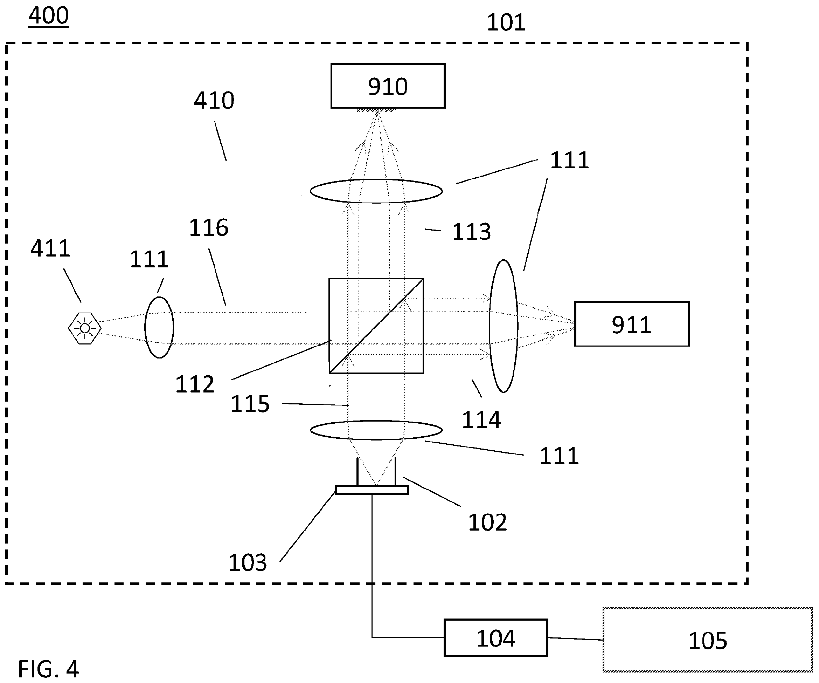

FIG. 4 illustrates an assay apparatus configured for increasing dynamic range, consistent with embodiments hereof. In embodiments, an assay apparatus 400 may include an optical system 410, a housing 101, a plate electrical connector 103, a voltage or current source 104, and a computer system 105. The assay apparatus 400 may further include any components, parts, or devices appropriate for an assay system. The optical system 410 includes detectors 910 and 911 configured to make optical measurements. The assay apparatus 400 is configured to conduct ECL assays by initiating electrochemical processes in a microplate 102 and measuring or detecting the light emitted therefrom. The electrochemical processes may be initiated via the plate electrical connector 103 excited by the voltage or current source 104. The housing 101 may be, for example, a light-tight enclosure.

The light emitted from the electrochemical process is received by the optical system 410. The optical system 410 includes one or more optical devices 111, which may include, as appropriate, objective lenses, imaging optics, etc. The optical system 410 further includes a beam splitting device 112 configured to split light emitted from the electrochemical process into a first light beam 113 directed at the first detector 910 and a second light beam 114 directed at the second detector 911. The first detector 910 and the second detector 911 are each configured to capture data associated with the electrochemical process, such as light emitted therefrom. The first detector 910 and the second detector 911 are further configured to communicate with the computer system 105 of the assay apparatus to transmit data, receive settings, etc.

The beam splitting device 112 may also split reference light 116 emitted from a reference light source 411. Light emitted from the reference light source 411 may be transmitted through the beam splitting device 112 to the second detector 911 and reflected by the beam splitting device to the first detector 910. The reference light source 411 may be configured to emit the reference light 116 at a specified, predetermined or known intensity and wavelength range. The reference light source 411 may be turned on (e.g., selectively activated), for example, for a brief period of time (e.g., a pulse), prior to making an analytical assay measurement (e.g., capture of emitted light) and may be used to normalize the output of the first detector 910 and the second detector 911 and correct for gain variation and drift. When the reference light source 411 is illuminated, the larger fraction of its output is directed to the second detector 911 in a second reference light beam via transmission and the smaller fraction to the first detector 910 in a first reference light beam via reflection.

In embodiments that include the reference light source 411, the arrangement, make-up, and configuration of first detector 910 and second detector 911 may include all of the variations discussed above with respect to FIG. 1 and the optical system 110.

In further variations of the assay apparatuses 100, 200, 300, and 400, one or more filters may be employed in the associated optical systems. Such filters may be configured to permit light of selected wavelengths to reach respective detectors within the system. For example, such filters may be used with certain assays to block or reduce the transmission of light emitted from non-analytes (e.g., a read buffer).

The above described systems, methods, and apparatuses are discussed above with respect to specific devices and specific types of assays. Description of specific assays or specific devices are provided for example and illustrative purposes only and the embodiments disclosed herein are not limited thereto. In embodiments, the optical systems described herein may be employed in any light detection system that may be improved by a high dynamic range system having the advantages discussed herein. Further, additional optical detection devices not specifically discussed herein may also be suitable for use with the optical systems described.

Additional embodiments of the systems and methods described herein include the following.

Embodiment 1 is an apparatus for conducting an assay based on an electrochemical process, comprising a first detector configured to capture data associated with the electrochemical process; a second detector configured to capture data associated with the electrochemical process; and a beam splitting device configured to split emitted light from the electrochemical process into a first light beam directed at the first detector and a second light beam directed at the second detector.

Embodiment 2 is the apparatus of embodiment 1, further including a housing and plate electrical connector.

Embodiment 3 is the apparatus of embodiments 1 or 2, further including a voltage source or current source configured to initiate the electrochemical process via the plate electrical connector.

Embodiment 4 is the apparatus of embodiments 1-3, wherein the beam splitting device is configured to transmit the first light beam and to reflect the second light beam, and the beam splitting device is configured with a transmission percentage of at least 90%, at least 95%, or at least 99%.

Embodiment 4 is the apparatus of embodiments 1-4, wherein the beam splitting device is configured to transmit the first light beam and to reflect the second light beam, and the beam splitting device is configured with a reflection percentage of at least 90%, at least 95%, or at least 99%.

Embodiment 6 is the apparatus of embodiments 1-5, wherein the detectors include a photo-detector.

Embodiment 7 is the apparatus of embodiments 1-6, wherein the photo-detector includes at least one of a CCD, CMOS device, scientific CMOS device, EMCCD device, SiPM device, APD, photodiode, and 2-layer transistor pixel stacked CMOS.

Embodiment 8 is the apparatus of embodiments 1-7, wherein the first detector and the second detector are of a same device type, the first detector is configured with a first set of settings to decrease read noise and increase low light sensitivity, and the second detector is configured with a second set of settings equal to the first set of settings.

Embodiment 9 is the apparatus of embodiments 1-8, wherein the first set of settings include binning settings combining multiple photo-detector pixels.

Embodiment 10 is the apparatus of embodiments 1-9, wherein a combined dynamic range of the first detector and the second detector is at least a magnitude of 10x, at least 20x, or at least 100x greater than an individual dynamic range of the first detector and the second detector.

Embodiment 11 is the apparatus of embodiments 1-10, wherein the first detector and the second detector are of a same device type, the first detector is configured with a first set of settings to decrease read noise and increase low light sensitivity, and the second detector is configured with the second set of settings to increase high-end dynamic range.

Embodiment 12 is the apparatus of embodiments 1-11, wherein the second set of settings include finer binning settings than the first set of settings to capture higher light levels.

Embodiment 13 is the apparatus of embodiments 1-10, wherein the first detector is a higher sensitivity device than the second detector.

Embodiment 14 is the apparatus of embodiments 1-10 and 13, wherein the first detector is a first CCD or CMOS device and the second detector is a second CCD or CMOS device.

Embodiment 15 is the apparatus of embodiments 1-10 and 13, wherein the first detector is a SiPM device and the second detector is an imaging device.

Embodiment 16 is the apparatus of embodiments 1-10 and 13, wherein the first detector occupies a first portion of a single sensor and the second detector occupies a second portion of the single sensor.

Embodiment 17 is the apparatus of embodiment 16, wherein the single sensor is an imaging sensor.

Embodiment 18 is the apparatus of embodiments 1-17, wherein a voltage source or current source configured to initiate the electrochemical process via a plate electrical connector is configured to initiate individual electrochemical processes in sequence to minimize optical crosstalk.

Embodiment 19 is the apparatus of embodiments 1-18, wherein the beam splitting device includes at least one of a fiber optic splitter, a beam splitting device cube, a plate beam splitting device, and a pellicle beam splitting device.

Embodiment 20 is the apparatus of embodiments 1-19, wherein the beam splitting device includes a fiber optic splitter, the apparatus further comprising: light collection optics configured to receive the emitted light; a fiber connector configured to interface with the light collection optics; a first fiber collimator configured to direct the first light beam at the first detector; and a second fiber collimator configured to direct the second light beam at the second detector.

Embodiment 21 is the apparatus of embodiment 20, wherein the fiber optic splitter is configured to split the emitted light into the first light beam and the second light beam.

Embodiment 22 is the apparatus of embodiments 20, wherein the light collection optics include at least one of a GRIN lens, fiber optic taper, discrete lens, combination of lenses, or Ball lens.

Embodiment 23 is the apparatus of embodiments 1-22, wherein the beam splitting device includes a 2x2 fiber optic coupler-splitter with a split ratio, the apparatus further comprising: a reference light source, wherein the 2x2 fiber optic coupler-splitter is configured to selectively direct reference light from the reference light source or the emitted light from the electrochemical process to the first detector and the second detector.

Embodiment 24 is the apparatus of embodiment 23,wherein the split ratio is selected from a 99:1 ratio and a 90:1 ratio.

Embodiment 25 is the apparatus of embodiment 23, wherein the reference light source is configured for selective activation.

Embodiment 26 is the apparatus of embodiments 1-25, further comprising a reference light source, wherein the beam splitting device is configured to split reference light emitted from the reference light source into a first reference light beam directed at the first detector and a second reference light beam directed at the second detector.

Embodiment 27 is the apparatus of embodiment 26, wherein the reference light source is configured for selective activation.

Embodiment 28 is the apparatus of embodiments 1-27,wherein at least one of the first detector and the second detector include a sensor array.

Embodiment 29 is the apparatus of embodiments 1-28, further comprising one or more filters configured to permit selected wavelengths of light through.

Embodiment 30 is an apparatus for conducting an assay based on a light-emitting process, comprising: a first detector configured to capture data associated with the emitted light; a second detector configured to capture data associated with the emitted light; and a beam splitting device configured to split the emitted light into a first light beam directed at the first detector and a second light beam directed at the second detector.

Embodiment 31 is the apparatus of embodiment 30, wherein the emitted light is emitted from a luminescence-based assay.

Embodiment 32 is the apparatus of embodiment 30, wherein the emitted light is emitted from a chemiluminescence-based assay.

Embodiment 33 is the apparatus of embodiment 30, wherein the emitted light is emitted from an electrochemiluminescence-based assay.

Embodiment 34 is the apparatus of embodiment 30, wherein the emitted light is emitted from a fluorescence-based assay.

It will be readily apparent to one of ordinary skill in the relevant arts that other suitable modifications and adaptations to the methods and applications described herein can be made without departing from the scope of any of the embodiments. It is to be understood that while certain embodiments have been illustrated and described herein, the invention is only limited by the appended claims. In the specification, there have been disclosed illustrative embodiments and, although specific terms are employed, they are used in a generic and descriptive sense only and not for purposes of limitation. Modifications and variations of the embodiments are possible in light of the above teachings. It is therefore to be understood that the embodiments may be practiced otherwise than as specifically described.

## Claims

1. An apparatus for conducting an assay based on a light-emitting process, comprising:
a first detector (910) configured to capture data associated with the process;
a second detector (911) configured to capture data associated with the process; and
a beam splitting device (112, 212, 312) configured to split emitted light from the process into a first light beam directed at the first detector (910) and a second light beam directed at the second detector (911), **characterized in that**:
the first detector (910) occupies a first portion of a single imaging sensor and the second detector (911) occupies a second portion of the single imaging sensor, or
the first detector (910) and the second detector (911) are of the same device type configured with different binning settings.

2. The apparatus of claim 1, further comprising a housing (101) and plate electrical connector (103) and a voltage source or current source (104) configured to initiate a light-emitting electrochemical process via the plate electrical connector (103).

3. The apparatus of claim 1, wherein the beam splitting device (112, 212, 312) is configured to transmit the first light beam and to reflect the second light beam, and
the beam splitting device (112, 212, 312) is configured with a transmission percentage of at least 90%, at least 95%, or at least 99%; or
wherein the beam splitting device (112, 212, 312) is configured to transmit the first light beam and to reflect the second light beam, and
the beam splitting device (112, 212, 312) is configured with a reflection percentage of at least 90%, at least 95%, or at least 99%.

4. The apparatus of claim 1, wherein the detectors (910, 911) include a photo-detector; or
wherein the detectors (910, 911) include a photo-detector and the photo-detector includes at least one of a CCD, CMOS device, scientific CMOS device, EMCCD device, SiPM device, APD, and photodiode.

5. The apparatus of claim 1, wherein
the first detector (910) and the second detector (911) are of a same device type,
the first detector (910) is configured with a first set of settings to decrease read noise and increase low light sensitivity, and
the second detector (911) is configured with a second set of settings equal to the first set of settings, or
the second detector (911) is configured with a second set of settings to increase high-end dynamic range.

6. The apparatus of claim 5, wherein the first set of settings include binning settings combining multiple photo-detector pixels, or
wherein the second setting include finer binning settings than the first set of settings to capture higher light levels.

7. The apparatus of claim 1, wherein a combined dynamic range of the first detector (910) and the second detector (911) is at least a magnitude of 10x, at least 20x, or at least 100x greater than an individual dynamic range of the first detector (910) and the second detector (911).

8. The apparatus of claim 1, wherein the first detector (910) is a higher sensitivity device than the second detector (911); or
wherein the first detector (910) is a higher sensitivity device than the second detector (911) and the first detector is a first CCD or CMOS device and the second detector is a second CCD or CMOS device.

9. The apparatus of claim 1, wherein a voltage source or current source (104) configured to initiate a light-emitting electrochemical process via a plate electrical connector (103) configured to initiate individual electrochemical processes in sequence to minimize optical crosstalk.

10. The apparatus of claim 1, wherein the beam splitting device (112, 212, 312) includes at least one of a fiber optic splitter, a beam splitting device cube, a plate beam splitting device, and a pellicle beam splitting device; or
wherein the beam splitting device (112, 212, 312) includes a fiber optic splitter, the apparatus further comprising:
light collection optics (211) configured to receive the emitted light;
a fiber connector configured to interface with the light collection optics;
a first fiber collimator (215) configured to direct the first light beam at the first detector (910); and
a second fiber (215) collimator configured to direct the second light beam at the second detector (911); or
wherein the beam splitting device (112, 212, 312) includes a fiber optic splitter, the apparatus further comprising:
light collection optics (211) configured to receive the emitted light;
a fiber connector configured to interface with the light collection optics;
a first fiber collimator (215) configured to direct the first light beam at the first detector (910);
a second fiber collimator (215) configured to direct the second light beam at the second detector (911) and the fiber optic splitter is configured to split the emitted light into the first light beam and the second light beam; or
wherein the beam splitting device (112, 212, 312) includes a fiber optic splitter, the apparatus further comprising:
light collection optics (211) configured to receive the emitted light;
a fiber connector configured to interface with the light collection optics;
a first fiber collimator (215) configured to direct the first light beam at the first detector (910);
a second fiber collimator (215) configured to direct the second light beam at the second detector (911) and the light collection optics (211) include at least one of a GRIN lens, fiber optic taper, discrete lens, combination of lenses, or Ball lens.

11. The apparatus of claim 1, wherein the beam splitting device (112, 212, 312) includes a 2x2 fiber optic coupler-splitter with a split ratio, the apparatus further comprising:
a reference light source (311, 411), wherein
the 2x2 fiber optic coupler-splitter is configured to selectively direct reference light from the reference light source (311, 411) or the emitted light from the process to the first detector (910) and the second detector (911); or
wherein the beam splitting device (112, 212, 312) includes a 2x2 fiber optic coupler-splitter with a split ratio, the apparatus further comprising:
a reference light source (311, 411), wherein
the 2x2 fiber optic coupler-splitter is configured to selectively direct reference light from the reference light source (311, 411) or the emitted light from the process to the first detector (910) and the second detector (911) and wherein the split ratio is selected from a 99:1 ratio and a 90:1 ratio; or
wherein the beam splitting device (112, 212, 312) includes a 2x2 fiber optic coupler-splitter with a split ratio, the apparatus further comprising:
a reference light source (311, 411), wherein
the 2x2 fiber optic coupler-splitter is configured to selectively direct reference light from the reference light source (311, 411) or the emitted light from the process to the first detector (910) and the second detector (911) and wherein the reference light source is configured for selective activation.

12. The apparatus of claim 1, further comprising a reference light source (311, 411), wherein the beam splitting device (112, 212, 312) is configured to split reference light emitted from the reference light source (311, 411) into a first reference light beam directed at the first detector (910) and a second reference light beam directed at the second detector (911); or
wherein the beam splitting device (112, 212, 312) is configured to split reference light emitted from the reference light source (311, 411) into a first reference light beam directed at the first detector (910) and a second reference light beam directed at the second detector (911) and wherein the reference light source (311, 411) is configured for selective activation.

13. The apparatus of claim 1, wherein at least one of the first detector (910) and the second detector (911) include a sensor array.

14. The apparatus of claim 1, further comprising one or more filters configured to permit selected wavelengths of light through.

15. The apparatus of claim 1, wherein the emitted light is emitted from one of a luminescence-based assay, a chemiluminescence-based assay, an electrochemiluminescence-based assay, or a fluorescence-based assay.

## Patentansprüche

1. Vorrichtung zum Durchführen eines Tests auf der Basis eines Lichtemissionsprozesses, die umfasst:
einen ersten Detektor (910), der dazu eingerichtet ist, Daten zu erfassen, die dem Prozess zugeordnet sind;
einen zweiten Detektor (911), der dazu eingerichtet ist, Daten zu erfassen, die dem Prozess zugeordnet sind; und
eine Strahlteilungseinrichtung (112, 212, 312), die dazu eingerichtet ist, emittiertes Licht von dem Prozess in einen ersten Lichtstrahl, der auf den ersten Detektor (910) gerichtet wird, und einen zweiten Lichtstrahl, der auf den zweiten Detektor (911) gerichtet wird, aufzuteilen, **dadurch gekennzeichnet, dass**:
der erste Detektor (910) einen ersten Teil eines einzelnen Bildgebungssensors belegt und der zweite Detektor (911) einen zweiten Teil des einzelnen Bildgebungssensors belegt, oder
der erste Detektor (910) und der zweite Detektor (911) vom gleichen Einrichtungstyp sind, die mit verschiedenen Klasseneinteilungseinstellungen konfiguriert sind.

2. Vorrichtung nach Anspruch 1, die ferner ein Gehäuse (101) und ein elektrisches Plattenverbindungselement (103) und eine Spannungsquelle oder Stromquelle (104), die dazu eingerichtet ist, einen elektrochemischen Lichtemissionsprozess über das elektrische Plattenverbindungselement (103) einzuleiten, umfasst.

3. Vorrichtung nach Anspruch 1, wobei die Strahlteilungseinrichtung (112, 212, 312) dazu eingerichtet ist, den ersten Lichtstrahl durchzulassen und den zweiten Lichtstrahl zu reflektieren, und die Strahlteilungseinrichtung (112, 212, 312) mit einem Durchlassprozentsatz von mindestens 90 %, mindestens 95 % oder mindestens 99 % konfiguriert ist; oder
wobei die Strahlteilungseinrichtung (112, 212, 312) dazu eingerichtet ist, den ersten Lichtstrahl durchzulassen und den zweiten Lichtstrahl zu reflektieren, und
die Strahlteilungseinrichtung (112, 212, 312) mit einem Reflexionsprozentsatz von mindestens 90 %, mindestens 95 % oder mindestens 99 % konfiguriert ist.

4. Vorrichtung nach Anspruch 1, wobei die Detektoren (910, 911) einen Photodetektor umfassen; oder
wobei die Detektoren (910, 911) einen Photodetektor umfassen und der Photodetektor mindestens eines von einem CCD, einer CMOS-Vorrichtung, einer wissenschaftlichen CMOS-Vorrichtung, einer EMCCD-Vorrichtung, einer SiPM-Vorrichtung, einer APD und einer Photodiode umfasst.

5. Vorrichtung nach Anspruch 1, wobei
der erste Detektor (910) und der zweite Detektor (911) von einem gleichen Einrichtungstyp sind,
der erste Detektor (910) mit einem ersten Satz von Einstellungen konfiguriert ist, um Leserauschen zu verringern und die Empfindlichkeit bei geringem Licht zu erhöhen, und
der zweite Detektor (911) mit einem zweiten Satz von Einstellungen gleich dem ersten Satz von Einstellungen konfiguriert ist, oder
der zweite Detektor (911) mit einem zweiten Satz von Einstellungen konfiguriert ist, um den dynamischen Bereich am oberen Ende zu erhöhen.

6. Vorrichtung nach Anspruch 5, wobei der erste Satz von Einstellungen Klasseneinteilungseinstellungen umfasst, die mehrere Photodetektorpixel kombinieren, oder
wobei die zweite Einstellung feinere Klasseneinteilungseinstellungen umfasst als der erste Satz von Einstellungen, um höhere Lichtpegel zu erfassen.

7. Vorrichtung nach Anspruch 1, wobei ein kombinierter dynamischer Bereich des ersten Detektors (910) und des zweiten Detektors (911) mindestens eine Größenordnung von 10x, mindestens 20x oder mindestens 100x größer ist als ein individueller dynamischer Bereich des ersten Detektors (910) und des zweiten Detektors (911).

8. Vorrichtung nach Anspruch 1, wobei der erste Detektor (910) eine Einrichtung mit höherer Empfindlichkeit ist als der zweite Detektor (911); oder
wobei der erste Detektor (910) eine Einrichtung mit höherer Empfindlichkeit ist als der zweite Detektor (911) und der erste Detektor ein erstes CCD oder eine erste CMOS-Einrichtung ist und der zweite Detektor ein zweites CCD oder eine zweite CMOS-Einrichtung ist.

9. Vorrichtung nach Anspruch 1, wobei eine Spannungsquelle oder Stromquelle (104), die dazu eingerichtet ist, einen elektrochemischen Lichtemissionsprozess über ein elektrisches Plattenverbindungselement (103) einzuleiten, dazu eingerichtet ist, individuelle elektrochemische Prozesse der Reihe nach einzuleiten, um optisches Nebensprechen zu minimieren.

10. Vorrichtung nach Anspruch 1, wobei die Strahlteilungseinrichtung (112, 212, 312) mindestens einen von einem faseroptischen Teiler, einem Strahlteilungseinrichtungswürfel, einer Plattenstrahlteilungseinrichtung und einer Pellikelstrahlteilungseinrichtung umfasst; oder
wobei die Strahlteilungseinrichtung (112, 212, 312) einen faseroptischen Teiler umfasst, wobei die Vorrichtung ferner umfasst:
eine Lichtsammeloptik (211), die dazu eingerichtet ist, das emittierte Licht zu empfangen;
ein Faserverbindungselement, das dazu eingerichtet ist, mit der Lichtsammeloptik zu koppeln,
einen ersten Faserkollimator (215), der dazu eingerichtet ist, den ersten Lichtstrahl auf den ersten Detektor (910) zu richten; und
einen zweiten Faserkollimator (215), der dazu eingerichtet ist, den zweiten Lichtstrahl auf den zweiten Detektor (911) zu richten; oder
wobei die Strahlteilungseinrichtung (112, 212, 312) einen faseroptischen Teiler umfasst, wobei die Vorrichtung ferner umfasst:
eine Lichtsammeloptik (211), die dazu eingerichtet ist, das emittierte Licht zu empfangen;
ein Faserverbindungselement, das dazu konfiguriert ist, mit der Lichtsammeloptik zu koppeln;
einen ersten Faserkollimator (215), der dazu eingerichtet ist, den ersten Lichtstrahl auf den ersten Detektor (910) zu richten;
einen zweiten Faserkollimator (215), der dazu eingerichtet ist, den zweiten Lichtstrahl auf den zweiten Detektor (911) zu richten, und wobei der faseroptische Teiler dazu eingerichtet ist, das emittierte Licht in den ersten Lichtstrahl und den zweiten Lichtstrahl aufzuteilen; oder
wobei die Strahlteilungseinrichtung (112, 212, 312) einen faseroptischen Teiler umfasst, wobei die Vorrichtung ferner umfasst:
eine Lichtsammeloptik (211), die dazu eingerichtet ist, das emittierte Licht zu empfangen;
ein Faserverbindungselement, das dazu eingerichtet ist, mit der Lichtsammeloptik zu koppeln;
einen ersten Faserkollimator (215), der dazu eingerichtet ist, den ersten Lichtstrahl auf den ersten Detektor (910) zu richten;
einen zweiten Faserkollimator (215), der dazu eingerichtet ist, den zweiten Lichtstrahl auf den zweiten Detektor (911) zu richten, und wobei die Lichtsammeloptik (211) mindestens eine von einer GRIN-Linse, einem faseroptischen Konus, einer diskreten Linse, einer Kombination von Linsen oder einer Kugellinse umfasst.

11. Vorrichtung nach Anspruch 1, wobei die Strahlteilungseinrichtung (112, 212, 312) einen faseroptischen 2x2-Koppler-Teiler mit einem Teilungsverhältnis umfasst, wobei die Vorrichtung ferner umfasst:
eine Referenzlichtquelle (311, 411), wobei
der faseroptische 2x2-Koppler-Teiler dazu eingerichtet ist, selektiv Referenzlicht von der Referenzlichtquelle (311, 411) oder das emittierte Licht von dem Prozess auf den ersten Detektor (910) und den zweiten Detektor (911) zu richten; oder
wobei die Strahlteilungseinrichtung (112, 212, 312) einen faseroptischen 2x2-Koppler-Teiler mit einem Teilungsverhältnis umfasst, wobei die Vorrichtung ferner umfasst:
eine Referenzlichtquelle (311, 411), wobei
der faseroptische 2x2-Koppler-Teiler dazu eingerichtet ist, selektiv Referenzlicht von der Referenzlichtquelle (311, 411) oder das emittierte Licht von dem Prozess auf den ersten Detektor (910) und den zweiten Detektor (911) zu richten, und wobei das Teilungsverhältnis aus einem 99:1-Verhältnis und einem 90:1-Verhältnis ausgewählt ist; oder
wobei die Strahlteilungseinrichtung (112, 212, 312) einen faseroptischen 2x2-Koppler-Teiler mit einem Teilungsverhältnis umfasst, wobei die Vorrichtung ferner umfasst:
eine Referenzlichtquelle (311, 411), wobei
der faseroptische 2x2-Koppler-Teiler dazu eingerichtet ist, selektiv Referenzlicht von der Referenzlichtquelle (311, 411) oder das emittierte Licht von dem Prozess auf den ersten Detektor (910) und den zweiten Detektor (911) zu richten, und wobei die Referenzlichtquelle für eine selektive Aktivierung konfiguriert ist.

12. Vorrichtung nach Anspruch 1, die ferner eine Referenzlichtquelle (311, 411) umfasst, wobei die Strahlteilungseinrichtung (112, 212, 312) dazu eingerichtet ist, Referenzlicht, das von der Referenzlichtquelle (311, 411) emittiert wird, in einen ersten Referenzlichtstrahl, der auf den ersten Detektor (910) gerichtet wird, und einen zweiten Referenzlichtstrahl, der auf den zweiten Detektor (911) gerichtet wird, aufzuteilen; oder
wobei die Strahlteilungseinrichtung (112, 212, 312) dazu eingerichtet ist, Referenzlicht, das von der Referenzlichtquelle (311, 411) emittiert wird, in einen ersten Referenzlichtstrahl, der auf den ersten Detektor (910) gerichtet wird, und einen zweiten Referenzlichtstrahl, der auf den zweiten Detektor (911) gerichtet wird, aufzuteilen, und wobei die Referenzlichtquelle (311, 411) für eine selektive Aktivierung konfiguriert ist.

13. Vorrichtung nach Anspruch 1, wobei mindestens einer des ersten Detektors (910) und des zweiten Detektors (911) eine Sensoranordnung umfasst.

14. Vorrichtung nach Anspruch 1, die ferner ein oder mehrere Filter umfasst, die dazu eingerichtet sind, ausgewählte Wellenlängen von Licht durchzulassen.

15. Vorrichtung nach Anspruch 1, wobei das emittierte Licht aus einer von einer Anordnung auf Lumineszenzbasis, einer Anordnung auf Chemilumineszenzbasis, einer Anordnung auf Elektrochemilumineszenzbasis oder einer Anordnung auf Fluoreszenzbasis emittiert wird.

## Revendications

1. Appareil pour conduire un dosage basé sur un processus d'électroluminescence, comportant :
un premier détecteur (910) configuré pour capturer des données associées au processus ;
un second détecteur (911) configuré pour capturer des données associées au processus ; et
un dispositif de séparation de faisceau (112, 212, 312) configuré pour séparer de la lumière émise à partir du processus en un premier faisceau lumineux dirigé vers le premier détecteur (910) et un second faisceau lumineux dirigé vers le second détecteur (911), **caractérisé en ce que** :
le premier détecteur (910) occupe une première partie d'un capteur d'imagerie unique et le second détecteur (911) occupe une seconde partie du capteur d'imagerie unique, ou
le premier détecteur (910) et le second détecteur (911) sont du même type de dispositif configuré avec différents réglages de regroupement.

2. Appareil selon la revendication 1, comportant en outre un boîtier (101) et un connecteur électrique à plaque (103) et une source de tension ou une source de courant (104) configurée pour lancer un processus électrochimique d'électroluminescence via le connecteur électrique à plaque (103).

3. Appareil selon la revendication 1, dans lequel le dispositif de séparation de faisceau (112, 212, 312) est configuré pour transmettre le premier faisceau lumineux et pour réfléchir le second faisceau lumineux, et
le dispositif de séparation de faisceau (112, 212, 312) est configuré avec un pourcentage de transmission d'au moins 90 %, d'au moins 95 % ou d'au moins 99 % ; ou
le dispositif de séparation de faisceau (112, 212, 312) étant configuré pour transmettre le premier faisceau lumineux et pour réfléchir le second faisceau lumineux, et le dispositif de séparation de faisceau (112, 212, 312) étant configuré avec un pourcentage de réflexion d'au moins 90 %, d'au moins 95 % ou d'au moins 99 %.

4. Appareil selon la revendication 1, dans lequel les détecteurs (910, 911) comprennent un photodétecteur ; ou
les détecteurs (910, 911) comprenant un photodétecteur et le photodétecteur comprenant au moins un élément parmi un CCD, un dispositif CMOS, un dispositif CMOS scientifique, un dispositif EMCCD, un dispositif SiPM, une APD et une photodiode.

5. Appareil selon la revendication 1, dans lequel
le premier détecteur (910) et le second détecteur (911) sont d'un même type de dispositif,
le premier détecteur (910) est configuré avec un premier ensemble de réglages afin de réduire le parasitage en lecture et d'augmenter une faible sensibilité à la lumière, et
le second détecteur (911) est configuré avec un second ensemble de réglages égal au premier ensemble de réglages, ou
le second détecteur (911) est configuré avec un second ensemble de réglages afin d'augmenter une plage dynamique élevée.

6. Appareil selon la revendication 5, dans lequel le premier ensemble de réglages comprend des réglages de regroupement combinant de multiples pixels de photodétecteur, ou
le second réglage comprend des réglages de regroupement plus fins que le premier ensemble de réglages afin de capturer des niveaux de luminance plus élevés.

7. Appareil selon la revendication 1, dans lequel une plage dynamique combinée du premier détecteur (910) et du second détecteur (911) est au moins une grandeur de 10x, au moins 20x ou au moins 100x supérieure à une plage dynamique individuelle du premier détecteur (910) et du second détecteur (911).

8. Appareil selon la revendication 1, dans lequel le premier détecteur (910) est un dispositif à sensibilité plus élevée que celle du second détecteur (911) ; ou
le premier détecteur (910) étant un dispositif à sensibilité plus élevée que celle du second détecteur (911) et le premier détecteur étant un premier dispositif CCD ou CMOS et le second détecteur est un second dispositif CCD ou CMOS.

9. Appareil selon la revendication 1, dans lequel une source de tension ou une source de courant (104) est configurée pour lancer un processus électrochimique d'électroluminescence via un connecteur électrique à plaque (103) configuré pour lancer des processus électrochimiques individuels en séquence afin de minimiser la diaphonie optique.

10. Appareil selon la revendication 1, dans lequel le dispositif de séparation de faisceau (112, 212, 312) comprend au moins un élément parmi un séparateur à fibre optique, un cube de dispositif de séparation de faisceau, un dispositif de séparation de faisceau à plaque et un dispositif de séparation de faisceau à pellicule ; ou
le dispositif de séparation de faisceau (112, 212, 312) comprenant un séparateur à fibre optique, l'appareil comportant en outre :
une optique de collecte de lumière (211) configurée pour recevoir la lumière émise ;
un connecteur de fibres configuré pour s'interfacer avec l'optique de collecte de lumière ;
un premier collimateur de fibres (215) configuré pour diriger le premier faisceau lumineux vers le premier détecteur (910) ; et
un second collimateur de fibres (215) configuré pour diriger le second faisceau lumineux vers le second détecteur (911) ; ou
le dispositif de séparation de faisceau (112, 212, 312) comprenant un séparateur à fibre optique, l'appareil comportant en outre :
une optique de collecte de lumière (211) configurée pour recevoir la lumière émise ;
un connecteur de fibres configuré pour s'interfacer avec l'optique de collecte de lumière ;
un premier collimateur de fibres (215) configuré pour diriger le premier faisceau lumineux vers le premier détecteur (910) ;
un second collimateur de fibres (215) configuré pour diriger le second faisceau lumineux vers le second détecteur (911) et le séparateur à fibre optique étant configuré pour séparer la lumière émise en premier faisceau lumineux et en second faisceau lumineux ; ou
le dispositif de séparation de faisceau (112, 212, 312) comprenant un séparateur à fibre optique, l'appareil comportant en outre :
une optique de collecte de lumière (211) configurée pour recevoir la lumière émise ;
un connecteur de fibres configuré pour s'interfacer avec l'optique de collecte de lumière ;
un premier collimateur de fibres (215) configuré pour diriger le premier faisceau lumineux vers le premier détecteur (910) ;
un second collimateur de fibres (215) configuré pour diriger le second faisceau lumineux vers le second détecteur (911) et l'optique de collecte de lumière (211) comprenant au moins une lentille GRIN, un cône de fibres optiques, une lentille discrète, une combinaison de lentilles ou une lentille boule.

11. Appareil selon la revendication 1, dans lequel le dispositif de séparation de faisceau (112, 212, 312) comprend un coupleur-séparateur à fibre optique 2x2 avec un rapport de séparation, l'appareil comportant en outre :
une source de lumière de référence (311, 411),
le coupleur-séparateur à fibre optique 2x2 étant configuré pour diriger sélectivement de la lumière de référence provenant de la source de lumière de référence (311, 411) ou la lumière émise à partir du processus vers le premier détecteur (910) et le second détecteur (911) ; ou
le dispositif de séparation de faisceau (112, 212, 312) comprenant un coupleur-séparateur à fibre optique 2x2 avec un rapport de séparation, l'appareil comportant en outre :
une source de lumière de référence (311, 411),
le coupleur-séparateur à fibre optique 2x2 étant configuré pour diriger sélectivement de la lumière de référence provenant de la source de lumière de référence (311, 411) ou la lumière émise à partir du processus vers le premier détecteur (910) et le second détecteur (911) et le rapport de séparation étant choisi entre un rapport 99:1 et un rapport 90:1 ; ou
le dispositif de séparation de faisceau (112, 212, 312) comprenant un coupleur-séparateur à fibre optique 2x2 avec un rapport de séparation, l'appareil comportant en outre :
une source de lumière de référence (311, 411),
le coupleur-séparateur à fibre optique 2x2 étant configuré pour diriger sélectivement de la lumière de référence provenant de la source de lumière de référence (311, 411) ou la lumière émise à partir du processus vers le premier détecteur (910) et le second détecteur (911), et la source de lumière de référence étant configurée pour une activation sélective.

12. Appareil selon la revendication 1, comportant en outre une source de lumière de référence (311, 411),
le dispositif de séparation de faisceau (112, 212, 312) étant configuré pour séparer de la lumière de référence émise à partir de la source de lumière de référence (311, 411) en un premier faisceau lumineux de référence dirigé vers le premier détecteur (910) et un second faisceau lumineux de référence dirigé vers le second détecteur (911) ; ou
le dispositif de séparation de faisceau (112, 212, 312) étant configuré pour séparer de la lumière de référence émise à partir de la source de lumière de référence (311, 411) en un premier faisceau lumineux de référence dirigé vers le premier détecteur (910) et un second faisceau lumineux de référence dirigé vers le second détecteur (911), et la source de lumière de référence (311, 411) étant configurée pour une activation sélective.

13. Appareil selon la revendication 1, dans lequel au moins un détecteur parmi le premier détecteur (910) et le second détecteur (911) comprend un réseau de capteurs.

14. Appareil selon la revendication 1, comportant en outre un ou plusieurs filtres configurés pour permettre à des longueurs d'onde sélectionnées de la lumière de les traverser.

15. Appareil selon la revendication 1, dans lequel la lumière émise est émise à partir d'un dosage parmi un dosage par luminescence, un dosage par chimiluminescence, un dosage par électrochimiluminescence ou un dosage par fluorescence.
